# EUROPEAN PATENT APPLICATION

(11) **EP 4 435 384 A1**
(43) Date of publication of application: **25.09.2024**
(21) Application number: 22895211.5
(22) Date of filing: 09.09.2022
(51) Int. Cl.: G01D 5/245

(54) **ENCODER COVER AND MOTOR**

(30) Priority: 17.11.2021 JP 2021187232
(71) Applicant: Panasonic Intellectual Property Management Co., Ltd., Osaka-shi, Osaka 540-6207 (JP)
(72) Inventor: YANO, Raiki, Osaka 571-0057 (JP); TAMURA, Shinya, Osaka 571-0057 (JP); OMURA, Shuhei, Osaka 571-0057 (JP)
(74) Representative: SSM Sandmair
(86) International application number: PCT/JP2022/033964
(87) International publication number: WO 2023/089924

(57) **Abstract**

Heat transfer from a motor main body to an encoder is suppressed. Disclosed encoder cover (10) is encoder cover (10) that covers encoder (20) that detects a rotational position of shaft (41) of motor (1). Encoder cover (10) includes flange (11) that attaches encoder (20), first cover member (12) that is provided at a position opposite to flange (11) as viewed from encoder (20) to cover a part of encoder (20), and second cover member (13) that connects flange (11) and first cover member (12) to cover a part of encoder (20). A coefficient of thermal conductivity of second cover member (13) is smaller than a coefficient of thermal conductivity of flange (11) and a coefficient of thermal conductivity of first cover member (12).

## Description

### TECHNICAL FIELD

The present disclosure relates to an encoder cover that covers an encoder that detects a rotational position of a shaft of a motor, and a motor including the encoder cover.

### BACKGROUND ART

In the related art, an encoder cover that covers an encoder that detects a rotational position of a shaft of a motor is known (for example, see PTL 1). The encoder cover of PTL 1 includes an encoder storing portion for storing the encoder, and a flange portion for joining to a bracket of the motor. The encoder storing portion and the flange portion are integrally formed by using a die-cast alloy having conductivity.

### Citation List

### Patent Literature

PTL 1: Unexamined Japanese Patent Publication No. 2015-1511

### SUMMARY OF THE INVENTION

In the encoder cover of PTL 1, there is a possibility that a normal operation of the encoder is hindered due to heat of a motor main body (including a magnetic circuit portion having a rotor and a stator.). That is, since the encoder storing portion and the flange portion are integrally formed by using the die-cast alloy having a high coefficient of thermal conductivity, the heat of the motor main body is easily transferred to the encoder storing portion with the flange portion interposed therebetween. In this manner, the heat fills inside the encoder storing portion, that is, in a space in which the encoder is stored, and the normal operation of the encoder is hindered by the heat. In such a situation, an object of the present disclosure is to suppress heat transfer from a motor main body to an encoder.

An aspect according to the present disclosure relates to an encoder cover. The encoder cover includes a flange to which the encoder is attached, a first cover member that is provided at a position opposite to the flange as viewed from the encoder and covers a part of the encoder, and a second cover member that connects the flange to the first cover member and covers a part of the encoder. A coefficient of thermal conductivity of the second cover member is smaller than each of a coefficient of thermal conductivity of the flange and a coefficient of thermal conductivity of the first cover member.

Another aspect according to the present disclosure relates to a motor. The motor includes the above-described encoder cover, an encoder stored in the encoder cover, and a main body including a shaft from which a rotational position is detected by the encoder.

According to the present disclosure, it is possible to suppress the heat transfer from the motor main body to the encoder.

### BRIEF DESCRIPTION OF THE DRAWINGS

Fig. 1 is a perspective view illustrating an example of an encoder cover according to an exemplary embodiment of the present disclosure.
Fig. 2 is a top view of the encoder cover according to the exemplary embodiment of the present disclosure.
Fig. 3 is a sectional view taken along line III-III in Fig. 2, and also illustrates a shaft of a motor and the like.

### DESCRIPTION OF EMBODIMENT

Exemplary embodiments of an encoder cover and a motor according to an exemplary embodiment of the present disclosure will be described below by way of an example. However, the present disclosure is not limited to examples to be described below. Although specific numerical values and materials may be provided as examples in the description below, other numerical values and materials may be applied as long as the effects of the present disclosure can be obtained.

### (Encoder cover)

The encoder cover according to the present disclosure is an encoder cover that covers an encoder that detects a rotational position of a shaft of a motor, and includes a flange, a first cover member, and a second cover member. The motor includes a main body having a rotor including a shaft and a stator facing the rotor with a gap interposed therebetween.

The flange is a member for attaching the encoder. The flange may have an insertion hole through which an attachment screw for attaching the flange itself to a motor bracket is inserted. The encoder and a bearing rotatably supporting the shaft of the motor may be attached to the flange. A rotating plate included in the encoder may be attached to the shaft of the motor.

The first cover member is provided at a position opposite to the flange as viewed from the encoder. The first cover member covers a part of the encoder. The first cover member may have a lid shape.

The second cover member connects the flange and the first cover member. The second cover member covers a part of the encoder. The second cover member may be provided between the flange and the first cover member. The second cover member may have a tubular shape.

A storage space in which the encoder is stored may be defined by the flange, the first cover member, and the second cover member. The storage space may be a sealed space.

A coefficient of thermal conductivity of the second cover member is smaller than a coefficient of thermal conductivity of the flange and a coefficient of thermal conductivity of the first cover member. Thermal conduction between the flange, the first cover member, and the second cover member is suppressed by such a second cover member. Thus, even though heat is generated in a motor main body, the heat is less likely to be transferred to the first cover member and the second cover member via the flange, and the heat is less likely to fill inside the encoder cover, that is, in a space in which the encoder is stored. Accordingly, heat transfer from the motor main body to the encoder can be suppressed.

Each of the first cover member and the flange may be made of a conductive material. A metal, a carbon material represented by glassy carbon, a conductive resin, or the like can be used as the conductive material.

The first cover member may be made of a first metal (for example, aluminum or an aluminum alloy). The first cover member made of the first metal has a high coefficient of thermal conductivity. Thus, even though the inside of the encoder cover is filled with heat, the heat can be dissipated to an outside with the first cover member interposed therebetween. Accordingly, it is possible to further suppress hindering of a normal operation of the encoder by heat.

The second cover member may be made of a first resin (for example, nylon resin). The second cover member made of the first resin has a low coefficient of thermal conductivity. Thus, a heat insulating function of the second cover member can be easily secured.

The encoder cover may further include a magnetic shield member that is fixed to the first cover member to cover at least a part of the encoder. The magnetic shield member may be made of a second metal (for example, iron or iron alloy) and may not come into contact with the flange. According to such a magnetic shield member, it is possible to suppress the influence of magnetic noise on the encoder. In addition, the magnetic shield member is made of a second metal having a high coefficient of thermal conductivity in terms of a function thereof. In a case where the magnetic shield member does not come into contact with the flange, the heat transfer from the flange to the first cover member with the magnetic shield member interposed therebetween is suppressed, and the filling of the heat inside the encoder cover is avoided. Note that, the second metal may be different kind from or the same kind as the first metal.

The first cover member may be fixed to the flange by a bolt having conductivity (for example, an iron bolt). According to this configuration, even though electric field noise enters the first cover member, the electric field noise is released to the flange with the bolt interposed therebetween. Accordingly, the electric field noise is less likely to be transferred to the encoder, and malfunction of the encoder can be suppressed. Note that, the electric field noise transferred to the flange may be further transferred to the bracket included in the motor main body.

The second cover member may have a housing of a connector. The housing may be made of a second resin (for example, nylon resin). The connector may be a connector to which a wiring for transferring a detection signal of the encoder is connected. According to such a configuration, since it is not necessary to separately provide the housing of the connector with the second cover member, manufacturing cost of the encoder cover can be reduced. Note that, the second resin may be the same kind as or different kind from the first resin.

A portion of the second cover member other than the housing and the housing may be integrally formed. According to this configuration, the second cover member having the housing can be easily manufactured. In addition, the encoder cover can be easily assembled as compared with a case where the portion of the second cover member other than the housing and the housing are separate bodies.

In an axial direction of the shaft of the motor (a facing direction of the flange and the first cover member), a length of the second cover member may be a half or more of a length of the encoder cover. The second cover member has such a length, and thus, the heat insulating function of the second cover member can be further enhanced.

### (Motor)

A motor according to another exemplary embodiment of the present disclosure includes the above-described encoder cover, an encoder stored in the encoder cover, and a main body having a shaft of which a rotational position is detected by the encoder. The main body may have a rotor including a shaft and a stator facing the rotor with a gap interposed therebetween. The motor may be an inner rotor three-phase synchronous electric motor, but is not limited thereto. The encoder may be a multi-rotation absolute encoder (an absolute encoder that detects a rotational position and a rotation speed of the shaft), but is not limited thereto. The encoder may include a battery or may not include a battery.

As described above, according to the present disclosure, the heat transfer from the motor main body to the encoder can be suppressed, and thus, the encoder can be normally operated.

Hereinafter, examples of an encoder cover and a motor according to the present disclosure will be specifically described with reference to the drawings. The above components can be applied to components of the encoder cover and the motor of the examples to be described below. The components of the encoder cover and the motor of the examples to described below can be altered based on the above description. In addition, matters to be described below may be applied to the exemplary embodiment described above. Among the components of the encoder cover and the motor of the example to be described below, components that are not essential to the encoder cover and the motor according to the present disclosure may be omitted. Note that, the following drawings are schematic and do not accurately reflect the shape and number of actual members.

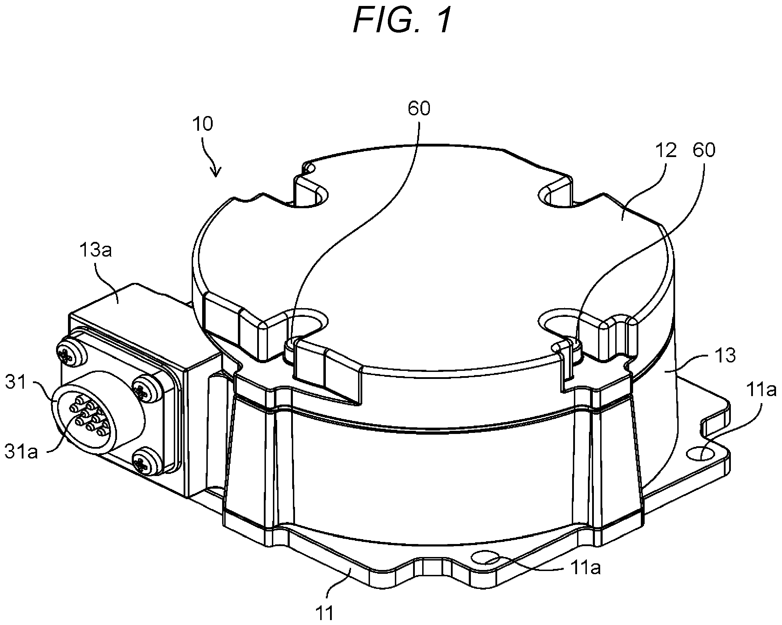

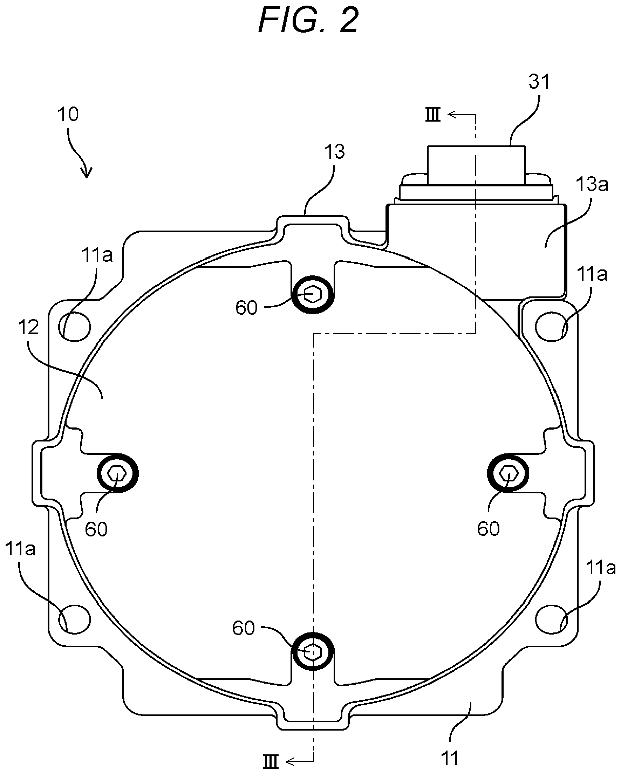

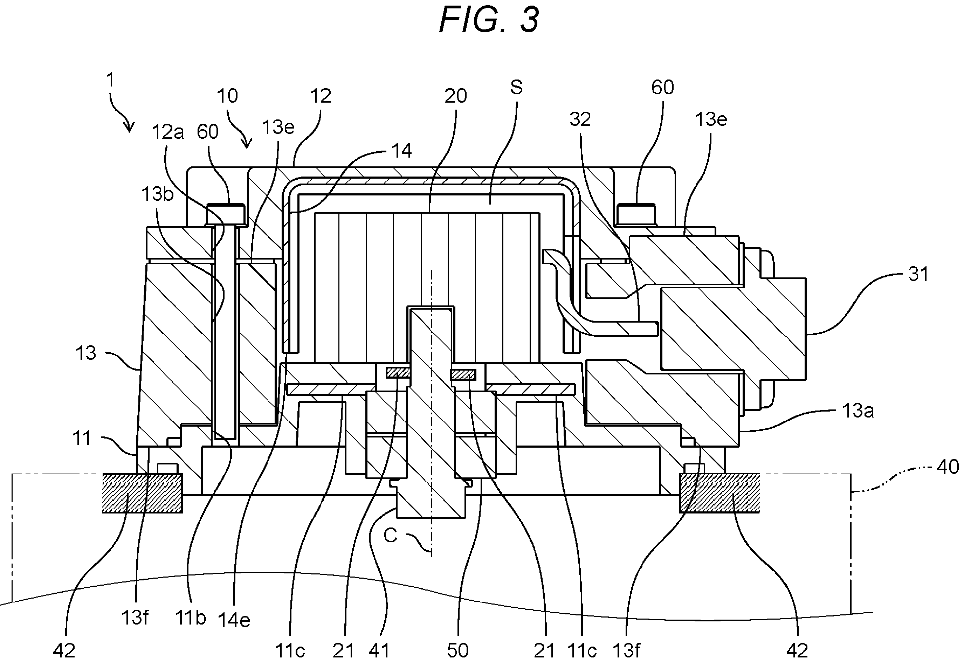

Fig. 1 is a perspective view illustrating an example of encoder cover 10 according to the exemplary embodiment of the present disclosure. Fig. 2 is a top view of encoder cover 10. Fig. 3 is a sectional view taken along line III-III in Fig. 2, and is a sectional view illustrating shaft 41 of motor 1 and the like.

As illustrated in Figs. 1 to 3, motor 1 includes encoder cover 10, encoder 20, and main body 40 having a rotor including shaft 41 and a stator. Motor 1 of the present exemplary embodiment is an inner rotor three-phase synchronous electric motor, but is not limited thereto.

Encoder cover 10 is an element that covers encoder 20, and includes flange 11, first cover member 12, second cover member 13, and magnetic shield member 14.

Flange 11 is a member for attaching encoder 20. Flange 11 of the present exemplary embodiment is made of aluminum (an example of a third metal), but is not limited thereto. For example, flange 11 may be made of stainless steel. Flange 11 has insertion hole 11a through which an attachment screw for attaching the flange itself to bracket 42 of motor 1 is inserted. In this example, four insertion holes 11a are provided, but the number of insertion holes 1 1a is not limited thereto. Encoder 20 is attached to flange 11, and bearing 50 that rotatably supports shaft 41 is also attached to the flange. Magnetic shield plate 11c having an annular shape made of, for example, iron is embedded in flange 11. Note that, a magnetic substance is desirable as a material of magnetic shield plate 11c, and an iron alloy such as stainless steel can be used in addition to iron.

First cover member 12 is provided at a position opposite to flange 11 as viewed from encoder 20 (a left side of encoder 20 in the sheet of Fig. 3). First cover member 12 of the present exemplary embodiment is made of aluminum (first metal) as a conductive material, but is not limited thereto. A material having a high coefficient of thermal conductivity is particularly desirable as the material of first cover member 12, and for example, an aluminum alloy such as duralumin, copper, or an alloy containing copper can be used in addition to aluminum. First cover member 12 covers a part of encoder 20. In this example, first cover member 12 covers the top portion of encoder 20. First cover member 12 has a lid shape, but is not limited thereto.

Note that, each of first cover member 12 and flange 11 may be made of a conductive material. As the conductive material, a metal, a carbon material represented by glassy carbon, a conductive resin, or the like can be used in addition to the materials described above. Note that, first cover member 12 and flange 11 may be made of the same material or different materials.

First cover member 12 is fixed to flange 11 by iron bolt 60. In this example, four bolts 60 are provided, but the number of bolts 60 is not limited thereto. Each bolt 60 is screwed into bolt hole 11b of flange 11 with first through-hole 12a of first cover member 12 and second through-hole 13b of second cover member 13 interposed therebetween. Note that, a material of bolt 60 is desirably conductive, and is not limited to iron. For example, aluminum, stainless steel, brass, or the like can be used.

Second cover member 13 is provided between flange 11 and first cover member 12. Second cover member 13 connects flange 11 and first cover member 12. Second cover member 13 is fixed to first cover member 12 at first end 13e, and is fixed to flange 11 at second end 13f. Second cover member 13 of the present exemplary embodiment is made of a nylon resin (first resin), but is not limited thereto. As second cover member 13, a material having a low coefficient of thermal conductivity is desirable, and polystyrene or the like can be used in addition to the nylon resin. Second cover member 13 covers a part of encoder 20. In this example, second cover member 13 covers a side surface portion of encoder 20. Second cover member 13 has a tubular shape, but is not limited thereto.

Second cover member 13 includes housing 13a of connector 31. Housing 13a stores connector 31 such that external terminal 31a of connector 31 is exposed. A portion of second cover member 13 other than housing 13a and housing 13a are integrally formed. Housing 13a of the present exemplary embodiment is made of nylon resin (second resin), but is not limited thereto. As a material of housing 13a, a material having a low coefficient of thermal conductivity is desirable, and polystyrene or the like can be used in addition to the nylon resin. Wiring 32 for transferring a detection signal of encoder 20 is connected to connector 31. Note that, the first resin and the second resin may be the same kind material or different kinds of materials.

Here, the coefficient of thermal conductivity of second cover member 13 made of nylon resin is smaller than a coefficient of thermal conductivity of flange 11 made of aluminum and the coefficient of thermal conductivity of first cover member 12 made of aluminum. Thus, even though heat is generated in main body 40, the heat is hardly transferred to first cover member 12 and second cover member 13 with flange 11 interposed therebetween. Accordingly, the heat is less likely to fill inside storage space S to be described later, and the heat transferred from main body 40 to encoder 20 is suppressed.

In Fig. 3, flange 11, first cover member 12, and second cover member 13 define storage space S in which encoder 20 is stored. Storage space S is a sealed space.

Magnetic shield member 14 is fixed to first cover member 12. Magnetic shield member 14 of the present exemplary embodiment is made of iron (second metal), but is not limited thereto. As a material of magnetic shield member 14, a magnetic substance is desirable, and nickel, stainless steel, or the like can be used as the material in addition to iron. Magnetic shield member 14 covers at least a part of encoder 20. In this example, magnetic shield member 14 covers the top portion and the side surface portion of encoder 20. Magnetic shield member 14 of the present exemplary embodiment has a bottomed cylindrical shape, but is not limited thereto. Magnetic shield member 14 does not come into contact with flange 11. In this example, a predetermined gap is present between distal end 14e of magnetic shield member 14 and flange 11.

Encoder 20 is an element that detects a rotational position and a rotation speed of shaft 41. Encoder 20 of the present exemplary embodiment is a battery type multi-rotation absolute encoder, but is not limited thereto. Encoder 20 includes rotating plate 21 fixed to shaft 41. Encoder 20 detects the rotational position and the rotation speed of shaft 41 by reading a predetermined pattern of rotating plate 21.

Shaft 41 is a member extending in a direction along rotation axis C of the rotor (a left-right direction in the sheet of Fig. 3). Shaft 41 is fixed to the rotor to rotate together with the rotor. Shaft 41 is rotatably supported by bearing 50.

### INDUSTRIAL APPLICABILITY

The present disclosure can be used for an encoder cover and a motor.

### REFERENCE MARKS IN THE DRAWINGS

- 1: motor
- 10: encoder cover
- 11: flange
- 11a: insertion hole
- 11b: bolt hole
- 11c: magnetic shield plate
- 12: first cover member
- 12a: first through-hole
- 13: second cover member
- 13a: housing
- 13b: second through-hole
- 13e: first end
- 13f: second end
- 14: magnetic shield member
- 14e: distal end
- 20: encoder
- 21: rotating plate
- 31: connector
- 31a: external terminal
- 32: wiring
- 40: main body
- 41: shaft
- 42: bracket
- 50: bearing
- 60: bolt
- S: storage space

## Claims

1. An encoder cover that covers an encoder, comprising:
a flange to which the encoder is attached;
a first cover member that is provided at a position opposite to the flange as viewed from the encoder and covers a part of the encoder; and
a second cover member that connects the flange to the first cover member and covers a part of the encoder,
wherein a coefficient of thermal conductivity of the second cover member is smaller than each of a coefficient of thermal conductivity of the flange and a coefficient of thermal conductivity of the first cover member.

2. The encoder cover according to Claim 1, wherein each of the first cover member and the flange is made of a conductive material.

3. The encoder cover according to Claim 1 or 2, wherein the first cover member is made of a first metal.

4. The encoder cover according to any one of Claims 1 to 3, wherein the second cover member is made of a first resin.

5. The encoder cover according to any one of Claims 1 to 4, further comprising a magnetic shield member that is fixed to the first cover member and covers at least a part of the encoder, wherein
the magnetic shield member is made of a second metal, and does not come into contact with the flange.

6. The encoder cover according to any one of Claims 1 to 5, wherein the first cover member is fixed to the flange by a bolt having conductivity.

7. The encoder cover according to any one of Claims 1 to 6, wherein
the second cover member has a housing of a connector, and
the housing is made of a second resin.

8. The encoder cover according to Claim 7, wherein a portion of the second cover member other than the housing and the housing are integrally formed.

9. A motor comprising:
the encoder cover according to any one of Claims 1 to 8;
an encoder stored in the encoder cover; and
a main body including a shaft from which a rotational position is detected by the encoder.
